(19) Europäisches Patentamt / European Patent Office / Office européen des brevets

(11) **EP 4 298 062 B1**

(12) **EUROPEAN PATENT SPECIFICATION**

(45) Date of publication and mention of the grant of the patent:
**15.01.2025  Bulletin 2025/03**

(21) Application number: **22707726.0**

(22) Date of filing: **24.02.2022**

(51) International Patent Classification (IPC):
**C01G 53/00** (2006.01)    **H01M 4/525** (2010.01)

(52) Cooperative Patent Classification (CPC):
**H01M 4/525; C01G 53/50; H01M 10/052; H01M 10/0562;** C01P 2002/52; C01P 2002/85; C01P 2004/50; C01P 2004/61; C01P 2004/62; C01P 2006/80; H01M 2004/028; H01M 2220/20; H01M 2300/0068; Y02E 60/10

(86) International application number:
**PCT/EP2022/054619**

(87) International publication number:
**WO 2022/180147 (01.09.2022 Gazette 2022/35)**

(54) **LITHIUM NICKEL-BASED COMPOSITE OXIDE AS A POSITIVE ELECTRODE ACTIVE MATERIAL FOR RECHARGEABLE LITHIUM-ION BATTERIES**

VERBUNDOXID AUF LITHIUM-NICKEL-BASIS ALS POSITIVELEKTRODENAKTIVMATERIAL FÜR WIEDERAUFLADBARE LITHIUM-IONEN-BATTERIEN

OXYDE COMPOSITE À BASE DE LITHIUM ET DE NICKEL EN TANT QUE MATÉRIAU ACTIF D'ÉLECTRODE POSITIVE POUR DES BATTERIES LITHIUM-ION RECHARGEABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2021  EP 21159378**
**25.02.2021  EP 21159385**
**25.02.2021  EP 21159397**
**25.02.2021  EP 21159402**

(43) Date of publication of application:
**03.01.2024  Bulletin 2024/01**

(73) Proprietor: **Umicore**
**1000 Brussels (BE)**

(72) Inventors:
• **PAULSEN, Jens Martin**
  **Cheonan**
  **Chungcheongnam-do 331-200 (KR)**
• **KUMAKURA, Shinichi**
  **2250 Olen (BE)**
• **YANG, TaeHyeon**
  **Cheonan**
  **Chungcheongnam-do 331-200 (KR)**
• **YANG, HyeJeong**
  **Cheonan**
  **Chungcheongnam-do 331-200 (KR)**
• **KANG, JiHoon**
  **Cheonan**
  **Chungcheongnam-do 331-200 (KR)**
• **OH, JinDoo**
  **Cheonan**
  **Chungcheongnam-do 331-200 (KR)**
• **HYOUNG, JooEun**
  **Cheonan**
  **Chungcheongnam-do 331-200 (KR)**

(74) Representative: **Umicore RDI Patent Department**
**Watertorenstraat 33**
**2250 Olen (BE)**

(56) References cited:
EP-A1- 2 698 850    EP-A1- 3 641 028
WO-A1-2018/158078    US-A1- 2018 026 268
US-A1- 2019 123 347    US-A1- 2020 358 096

Remarks:

The file contains technical information submitted after the application was filed and not included in this specification

Remarks:

The file contains technical information submitted after the application was filed and not included in this specification

## Description

### TECHNICAL FIELD AND BACKGROUND

This invention relates to a lithium nickel-based oxide positive electrode active material for solid-state batteries suitable for electric vehicle (EV) and hybrid electric vehicle (HEV) applications, comprising lithium nickel-based oxide particles comprising zirconium (Zr).

A positive electrode active material is defined as a material which is electrochemically active in a positive electrode. By active material, it must be understood a material capable to capture and release Li ions when subjected to a voltage change over a predetermined period of time.

Document US 2018/026268 discloses a lithium nickel mixed oxide material (example 1) exhibiting $ZrO_2$ particles on its surface.

In the framework of the present invention, at% signifies atomic percentage. The at% or "atom percent" of a given element expression of a concentration means how many percent of all atoms in the claimed compound are atoms of said element. The designation at% is equivalent to mol% or "molar percent".

The weight percent (wt.%) of a first element E ($E_{wt1}$) in a material can be converted from a given atomic percent (at%) of said first element E ($E_{at1}$) in said material by applying the following formula:

$$E_{wt1} = \frac{(E_{at1} \times E_{aw1})}{\sum_{i=1}^{n}(E_{ati} \times E_{awi})} \times 100\%,$$

wherein the product of $E_{at1}$ with $E_{aw1}$, $E_{aw1}$ being the atomic weight (or molecular weight) of the first element E, is divided by the sum of $E_{ati} \times E_{awi}$ for the other elements in the material. $n$ is an integer which represents the number of different elements included in the material.

It is an object of the present invention to provide a positive electrode active material having an improved first charge capacity of at least 160 mAh/g in the solid-state battery.

### SUMMARY OF THE INVENTION

This objective is achieved by providing a positive electrode active material for solid-state batteries, wherein the positive electrode active material comprises Li, M', and oxygen, wherein M' comprises:

- Ni in a content x between 50.0 mol% and 75.0 mol%, relative to M';
- Co in a content y between 0.0 mol% and 40.0 mol%, relative to M';
- Mn in a content z between 0.0 mol% and 40.0 mol%, relative to M',
- D in a content a between 0.0 mol% and 2.0 mol%, relative to the total atomic content of M', wherein D comprises at least one element of the group consisting of: Al, B, Ba, Ca, Cr, Fe, Mg, Mo, Nb, S, Si, Sr, Ti, Y, V, W, and Zn, and,
- Zr in a content b between 0.1 mol% and 5.0 mol%, relative to M',
- wherein x, y, z, a, and b are measured by ICP,
- wherein x+y+z+a+b is 100.0 mol%,

wherein the positive electrode active material has a Zr content $Zr_A$ defined as $\frac{b}{(x+y+z+b)}$,

wherein the positive electrode active material has a Zr content $Zr_B$, wherein $Zr_B$ is determined by XPS analysis, wherein $Zr_B$ is expressed as molar fractions compared to the sum of molar fractions of Co, Mn, Ni, and Zr, as measured by XPS analysis,

wherein the ratio $Zr_B$ / $Zr_A$ > 50.0,

wherein the positive electrode active material comprises secondary particles having a plurality of primary particles, wherein said primary particle has an average diameter of between 170 nm to 340 nm as determined by the method of this invention.

The present invention concerns the following embodiments:

### Embodiment 1

In a first aspect, the present invention concerns a positive electrode active material for solid-state batteries, wherein the positive electrode active material comprises Li, M', and oxygen, wherein M' comprises:

- Ni in a content x between 50.0 mol% and 75.0 mol%, relative to M';
- Co in a content y between 0.0 mol% and 40.0 mol%, relative to M';

- Mn in a content z between 0.0 mol% and 70.0 mol%, relative to M', preferably Mn in a content z between 0.0 mol% and 40.0 mol% relative to M',
- D in a content a between 0.0 mol% and 2.0 mol%, relative to the total atomic content of M', wherein D comprises at least one element of the group consisting of: Al, B, Ba, Ca, Cr, Fe, Mg, Mo, Nb, S, Si, Sr, Ti, Y, V, W, and Zn, and,
- Zr in a content b between 0.1 mol% and 5.0 mol%, relative to M',
- wherein x, y, z, a, and b are measured by ICP,
- wherein x+y+z+a+b is 100.0 mol%,

wherein the positive electrode active material has a Zr content $Zr_A$ defined as $\frac{b}{(x+y+z+b)}$,
wherein the positive electrode active material has a Zr content $Zr_B$, wherein $Zr_B$ is determined by XPS analysis, wherein $Zr_B$ is expressed in percent as molar fractions compared to the sum of molar fractions of Co, Mn, Ni, and Zr, as measured by XPS analysis,
wherein the ratio $Zr_B / Zr_A > 50.0$,

Note that $Zr_A$ is the Zr content of the positive electrode active material as determined by ICP and expressed as a fraction relative to the sum of the contents of Co, Ni, Mn, and Zr.

Preferably, the $Zr_B / Zr_A$ ratio is at least 80, preferably at least 100, more preferably at least 130. Preferably, the $Zr_B / Zr_A$ ratio is at most 500, more preferably at most 300 and most preferably at most 200.

Preferably the positive electrode active material comprises secondary particles having a plurality of primary particles and wherein said primary particles have an average diameter of between 170 nm to 340 nm, preferably between 200 nm to 340 nm, as determined by measuring primary particle size in an image taken by SEM.

More preferably said primary particles have an average diameter of at least 180 nm, preferably 200 nm, preferably 220 nm, even more preferably of at least 225 nm.

Preferably said primary particles have an average diameter of at most 330 nm, preferably of at most 320 nm, more preferably of at most 300 nm, even more preferably of at most 250 nm.

Preferably said primary particles have an average diameter of between 180 nm and 330 nm, preferably between 200 nm and 320 nm, more preferably between 220 nm and 310 nm, even more preferably between 225 nm and 250 nm.

As appreciated by the skilled person the primary particle size is determined by measuring the particle size of the primary particle in an image taken by SEM.

Preferably, $x \geq 55.0$ mol% and more preferably $x \geq 60.0$ mol%

Preferably, $y > 0$ mol % and more preferably $y \geq 5.0$ mol and even more preferably $y \geq 10.0$ mol %

In another embodiment, said Ni in a content x is between 55 mol% and 72 mol% relative to M' and said Co in a content y is between 0.0 mol% and 20.0 mol% relative to M'.

In a preferred embodiment Ni is in a content $x \geq 55.0$ mol%, preferably $x \geq 60.0$ mol%, more preferably $x \geq 62.0$ mol%. In a preferred embodiment, $x \leq 72.0$ mol% preferably $x \leq 70.0$ mol% and more preferably $x \leq 68.0$ mol%.

In a more preferred embodiment Ni is in a content x between $55.0$ mol% $\leq x \leq 72.0$ mol%, preferably $60.0$ mol% $\leq x \leq 70.0$ mol%, more preferably $62.0$ mol% $\leq x \leq 68.0$ mol%.

As appreciated by the skilled person the amount of Li and M', preferably Li, Ni, Mn, Co, D and Zr in the positive electrode active material is measured with Inductively Coupled Plasma-Optical Emission Spectroscopy (ICP-OES). For example, but not limiting to the invention, an Agilent ICP 720-ES is used in the ICP-OES analysis.

In a preferred embodiment Mn is in a content $z > 0.0$ mol%, more preferably $z \geq 5.0$ mol%, and even more preferably $z \geq 8.0$ mol%. In a preferred embodiment the content is $z \leq 40.0$ mol%, preferably $z \leq 30.0$ mol%, and more preferably $z \leq 25.0$ mol%. In a preferred embodiment the content is $0.0$ mol% $< z \leq 40.0$ mol%, preferably $5.0$ mol% $\leq z \leq 30.0$ mol%, more preferably $8.0$ mol% $\leq z \leq 25.0$ mol%.

In a preferred embodiment Co is in a content $y > 0.0$ mol%, more preferably $y \geq 1.0$ mol%, and even more preferably $y \geq 3.0$ mol%. In a preferred embodiment the content is $y \leq 40.0$ mol%, more preferably $y \leq 30.0$ mol%, and even more preferably $y \leq 25.0$ mol%. In a preferred embodiment the content is $0.0$ mol% $< y \leq 40.0$ mol%, preferably $1.0$ mol% $\leq y \leq 30.0$ mol%, more preferably $3.0$ mol% $\leq y \leq 25.0$ mol%.

In a preferred embodiment D comprises at least one element of the group consisting of: Al, B, Ba, Ca, Cr, Fe, Mg, Mo, Nb, S, Si, Sr, Ti, Y, V, W, and Zn; preferably Al, B, Cr, Nb, S, Si, Ti, Y and W.

In a preferred embodiment D is in a content $a > 0.0$ mol%, more preferably $a \geq 0.25$ mol%, and even more preferably $a \geq 0.5$ mol%. In a preferred embodiment the content is $a \leq 2.0$ mol%, preferably $a \leq 1.75$ mol%, and more preferably $a \leq 1.5$ mol%. In a preferred embodiment the content is $0.0$ mol% $< z \leq 2.0$ mol%, preferably $0.25$ mol% $\leq z \leq 1.75$ mol% and more preferably $0.5$ mol% $\leq z \leq 1.5$ mol%.

As appreciated by the skilled person the secondary particles comprise of a plurality of primary particles, preferably more than 20 primary particles, preferably more than 10 primary particles, most preferably more than 5

EP 4 298 062 B1

primary particles. Primary particles are particles which are individual crystals or which are formed of less than five, and preferably at most three, primary particles which are themselves individual crystals. This can be observed in proper microscope techniques like Scanning Electron Microscope (SEM) by observing grain boundaries.

**Embodiment 2**

In a second embodiment, preferably according to the **Embodiment 1,** wherein the Zr content $Zr_A$ is b/(b+x+y+z) is at least 0.10 mol% and at most 1.00 mol%. Preferably, the Zr content $Zr_A$ is b/(b+x+y+z) is at least 0.20 mol% and at most 0.80 mol%. Most preferably the Zr content $Zr_A$ is b/(b+x+y+z) is at least 0.30 mol% and at most 0.70 mol%. In an alternative but even preferred embodiment, the Zr content $Zr_A$ is b/(b+x+y+z) is at least 0.10 mol% and at most 1.50 mol%. Preferably, the Zr content $Zr_A$ is b/(b+x+y+z) is at least 0.20 mol% and at most 1.00 mol%. Most preferably the Zr content $Zr_A$ is b/(b+x+y+z) is at least 0.30 mol% and at most 0.90 mol%.

In a preferred embodiment, Zr is in a content b of at least 0.10 mol% and at most 1.00 mol% relative M', more preferably at least 0.20 mol% and at most 0.80 mol% relative to M', most preferably at least 0.30 mol% and at most 0.70 mol% relative M'.

In an alternative but even preferred embodiment Zr is in a content b of at least 0.10 mol% and at most 1.50 mol% relative M', more preferably at least 0.20 mol% and at most 1.00 mol% relative to M', most preferably at least 0.30 mol% and at most 0.90 mol% relative M'.

In a preferred embodiment the Zr content $Zr_B$ is more than 0.25 mol%, preferably more than 0.50 mol%, most preferably more than 0.60 mol%. In a preferred embodiment $Zr_B$ is less than 2.0 mol%, preferably less than 1.5 mol%, more preferably less than 1.0 mol%. In a preferred embodiment $Zr_B$ is between 0.25 mol% and 2.0 mol%, preferably between 0.50 mol% and 1.5 mol%, most preferably between 0.60 mol% and 1.0 mol%. As appreciated by the skilled person $Zr_B$ is expressed as molar fraction, as measured by XPS analysis compared to the sum of molar fractions of Co, Mn, Ni, and Zr, as measured by XPS analysis.

**Embodiment 3**

In a third embodiment, according to **Embodiment 1 to 2,** said material has a secondary particle median size D50 of at least 2 $\mu$m, and preferably of at least 5 $\mu$m as determined by laser diffraction particle size analysis.

Preferably, said material has a secondary particle median size D50 of at most 15 $\mu$m, and preferably of at most 13 $\mu$m as determined by laser diffraction particle size analysis.

For example, but not limiting to the invention, the laser diffraction particle size analysis is performed by a Malvern Mastersizer 3000.

**Embodiment 4**

In a fourth embodiment, according to **Embodiment 1 to 3,** said material has a carbon content of at least 600 ppm, preferably of at least 650 ppm, more preferably of at least 750 ppm and most preferably at least 900 ppm as determined by carbon analyzer.

Preferably, said material has a carbon content of at most 5000 ppm, preferably of at most 3000 ppm, more preferably of at most 1500 ppm and most preferably of at most 1100 ppm as determined by carbon analyzer.

**Embodiment 5**

In a fifth embodiment, according to any **Embodiment 1 to 4**, wherein the thickness of Zr > 10 nm. Preferably, the thickness is $\geq$ 15 nm and more preferably $\geq$ 20 nm as determined by TEM-EDS measurement. Preferably the thickness of Zr is $\leq$ 100 nm, preferably the thickness is $\leq$ 50 nm, more preferably the thickness is $\leq$ 30 nm. Preferably the thickness of Zr is between 10 nm and 100 nm, preferably between 15 nm and 50 nm, more preferably between 22 nm and 28 nm.

In the framework of this invention, the (minimum) thickness of the surface layer is defined as the shortest distance between a first point located at a periphery of a cross-section of a particle and a second point located in a line defined between said first point and a geometric center (or centroid) of said particle, wherein the difference of content of Zr measured by TEM-EDS at the second point location ($Zr_2$) and at any location between said second point location and the center of the particle is around 0.1 at%.

The content of Zr at the second point location ($Zr_2$) is constant: it can be superior to 0 at% and must be inferior or equal to 5.0% of a first content of Zr at the first point location ($Zr_1$). Said second content of $Zr_2$ is equal to a content of Zr at a third point location ($Zr_3$) in said line and said third point is located at any location between the geometric center of said particle and the second point location.

In other words, the thickness of the surface layer corresponds to a minimal distance D defined as:

$$D \ (in \ nm) = L_{Zr1} - L_{Zr2}$$

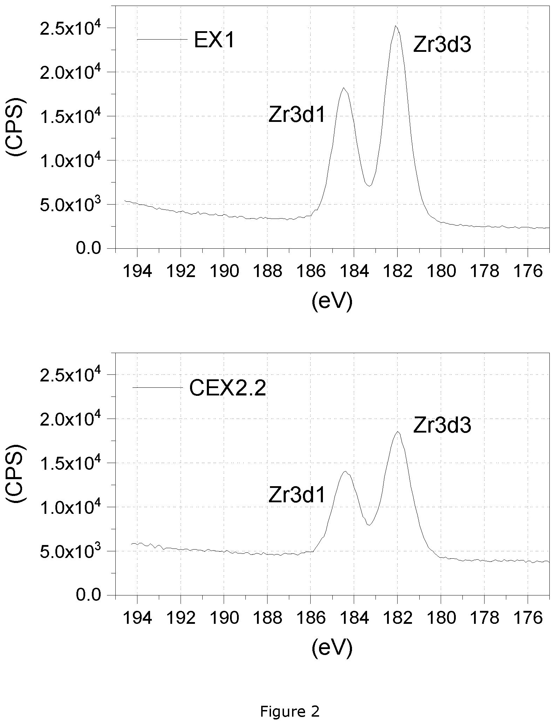

wherein $L_{Zr1}$ is a first point location at the periphery of a particle, $L_{Zr2}$ is a second point location in a line defined between said first point location and a geometric center of said particle as illustrated in Figure 2,
wherein a second content of Zr measured by TEM-EDS at the second point location $L_{Zr2}$ is superior or equal to 0 at% and inferior or equal to 5.0% of a first content of Zr ($Zr_1$) measured at the first point location. Said second content of Zr ($Zr_2$) is defined as:

$$Zr_2 \ (in \ at\%) = Zr_3 \pm 0.1 \ at\%,$$

**and optionally**

$$Zr_1 - Zr_2 \geq 10.0 \ at\%$$

$Zr_3$ is a third content of Zr (in at%) at a third point location ($L_{Zr3}$) in said line, said third point is located at any location between the geometric center of said particle and the second point location $L_{Zr2}$.

When $Zr_2$ and $Zr_3$ are superior to 0.0 at%, the second and third content of Zr corresponds to the content of Zr, measured by TEM-EDS, present as a dopant in the core of the particles according to the invention.

The TEM-EDS protocol is applied as follows:

1) A cross-sectional TEM lamella of the lithium transition metal-based oxide particles is extracted by cutting the particle sample using a Ga ion beam so as to obtain a prepared sample.

2) The prepared sample (a cross section of particle) is scanned with a TEM/EDS line scan from the external edge of the surface layer to the center of a lithium transition metal-based oxide particle, so as to provide a quantitative element analysis of the cross-section.

3) The Zr content detected by EDS are normalized by the total atomic content of Ni, Mn, Co, and Zr in the scanned lamella.

4) The measured line scan of Zr/(Ni+Mn+Co+Zr) is then plotted as a function of a linear distance in a cross section of said particle.

The aforementioned steps 1) to 4) are repeated as many times as there are particles to be analyzed.

The aforementioned TEM-EDS measurement is performed on at least one particle. When more than one particle is measured, the Zr/(Ni+Mn+Co+Zr) are numerically averaged.

For example, but not limiting to the invention, TEM-EDS measurement is performed with a a Tecnai G$^2$ F30 S-TWIN (FEI) with ELITE T 70 detector (EDAX).

As appreciated by the skilled person, for any of the **Embodiments 1 to 5,** $Zr_B$ is expressed as molar fraction, as measured by XPS analysis compared to the sum of molar fractions of Co, Mn, Ni, and Zr, as measured by XPS analysis; in particular $Zr_B$ is the molar fractions of Zr measured in a region of a secondary particle of the positive electrode active material according to invention defined between a first point of an external edge of said particle and a second point at a distance from said first point, said distance separating said first to said second point being equal to a penetration depth of said XPS, said penetration depth D being comprised between 1.0 to 10.0 nm. In particular, the penetration depth is the distance along an axis perpendicular to a virtual line tangent to said external edge and passing trough said first point.

The external edge of the particle is, in the framework of this invention, the boundary or external limit distinguishing the particle from its external environment.

Therefore, XPS analysis provides atomic content of elements in an uppermost layer of a particle with a penetration depth of about 10.0 nm from an outer boundary of the particle. The outer boundary of the particle is also referred to as "surface". In the framework of the present invention, at% signifies atomic percentage. The at% or "atomic percent" of a given element expression of a concentration means how many percent of all atoms in the concerned compound are atoms of said element. The designation at% is equivalent to mol% or "molar percent". For example, but not limiting to the invention, XPS analysis is carried out with a Thermo K-a+ spectrometer (Thermo Scientific).

The present invention concerns a use of the positive electrode active material according to any of the preceding **Embodiments 1 to 5** in a battery.

The present invention is also inclusive of a process for manufacturing the positive electrode active material according to any of the preceding **Embodiments 1 to 5,** comprising the steps of:

- preparing a lithium transition metal-based compound,
- mixing said lithium transition metal-based compound with a source of Zr, preferably Zr alkoxide in lithium alkoxide containing alcohol solvent, thereby obtaining a mixture, and
- removing volatile phases including solvent, preferably by vacuum heating,
- heating the mixture in an oxidizing atmosphere in a furnace at a temperature between 350°C and less than 500°C, preferably at most 450°C, for a time between 1 hour and 20 hours so as to obtain the positive electrode active material powder according to the present invention.

In a preferred embodiment the lithium transition metal-based compound is a lithium nickel-based oxide compound.

In a preferred embodiment of the method the lithium transition metal-based oxide compound comprising Li, M' and oxygen, wherein M' comprises Ni, Mn, Co and D, wherein D is at least one element of the group consisting of: Al, B, Ba, Ca, Cr, Fe, Mg, Mo, Nb, S, Si, Sr, Ti, Y, V, W, and Zn; preferably Al, B, Cr, Nb, S, Si, Ti, Y, W

Preferably the lithium transition metal oxide powder used is also typically prepared according to a lithiation process, that is the process wherein a mixture of a transition metal precursor and a lithium source is heated at a temperature preferably of at least 500 °C. Typically, the transition metal precursor is prepared by coprecipitation of one or more transition metal sources, such as salts, and preferably sulfates of the M' elements Ni, Mn and/or Co, in the presence of an alkali compound, such as an alkali hydroxide e.g. sodium hydroxide and/or ammonia.

Preferably the method comprises a further step, before heating said mixture, of drying said mixture, preferably by means of vacuum heating.

n a preferred embodiment of the method, the source of Zr is a Zr-alkoxide, preferably Zr-ethoxide, Zr-propoxide or Zr-butoxide, more preferably Zr-propoxide. In a preferred embodiment the Zr-alkoxide is mixed as a solid with the mixture. Alternatively, and more preferably, the Zr alkoxide is mixed as a solution with the slurry, wherein the solution comprises the Zr-alkoxide and a further alcohol, wherein the alkoxide group is a conjugate base of the further alcohol. For example, the Zr-alkoxide is Zr-propoxide, which is dissolved in propanol. Typically, the solution comprises 50-90 wt.% of the Zr-alkoxide by total weight of the solution. Examples of such a solution are a 70 wt.% Zr-propoxide in 1-propanol or a 80 wt.% Zr-butoxide in 1-butanol.

Preferably, the alcohol solvent is methanol, ethanol, propanol or butanol, preferably ethanol.

The present invention is also inclusive of a solid-state battery comprising the positive electrode active material according to any of the preceding **Embodiments 1 to 5,** preferably the solid-state battery comprises a sulfide based solid electrolyte, more preferably the sulfide based solid electrolyte comprises Li, P and S. Typically, the following sulfur containing compounds of $Li_6PS_5Cl$ (LPSCL), Thio-LISICON ($Li_{3.25}Ge_{0.25}P_{0.75}S_4$), $Li_2S$-$P_2S_5$-LiCl, $LiC_2S$-$SiS_2$, $LiI$-$Li_2S$-$SiS_2$, Li-$P_2S_5$-LiCl. $LiC_2S$-$SiS_2$, $LiI$-$Li_2S$-$SiS_2$, $LiI$-$Li_2S$-$P_2S_5$. $LiI$-$Li_2SP_2O_5$, $LiI$-$Li_3PO_4$-$P_2S_5$, $Li_2S$-$P_2S_5$, $Li_3PS_4$, $Li_7P_3S_{11}$, $LiI$-$Li_2S$-$B_2S_3$ , $Li_3PO_4$-$Li_2S$-$SiS_2$, $Li_3PO_4Li_2S$-$SiS_2$, $LiPO_4$-$Li_2S$-$SiS_2$, $Li_{10}GeP_2S_{12}$, $Li_{9.54}Si_{1.74}P_{1.44}S_{11.7}Cl_{0.3}$, and/or $Li_7P_3S_{11}$ may be suitably used.

## BRIEF DESCRIPTION OF THE FIGURES

Figure 1a. SEM image shows secondary particle of CEX2.2 comprising plurality of primary particles. Dotted line shows the area to be captured in order to obtain the average primary particle diameter.

Figure 1b. SEM image of CEX2.2 to obtain the average primary particle diameter.

Figure 1c. SEM image of EX1 to obtain the average primary particle diameter.

Figure 2. XPS spectra showing Zr peak of EX1 and CEX2.2.

Figure 3. TEM-EDS analysis result of Zr/(Ni+Mn+Co+Zr) of EX1 (x-axis: distance where 0 is the starting point of the surface layer, y-axis: element in atomic ratio)

## DETAILED DESCRIPTION

In the drawings and the following detailed description, preferred embodiments are described so as to enable the practice of the invention. Although the invention is described with reference to these specific preferred embodiments, it will be understood that the invention is not limited to these preferred embodiments. The invention includes numerous alternatives, modifications and equivalents that are apparent from consideration of the following detailed description and accompanying drawings.

**A) ICP analysis**

The amount of Li, Ni, Mn, Co, and Zr in the positive electrode active material powder is measured with the Inductively Coupled Plasma (ICP) method by using an Agilent ICP 720-ES (Agilent Technologies, https://www.agilent.com/cs/library/brochures/5990-6497EN%20720-725_ICP-OES_LR.pdf). 2 grams of powder sample is dissolved into 10 mL of high purity hydrochloric acid (at least 37 wt.% of HCl with respect to the total weight of solution) in an Erlenmeyer flask. The flask is covered by a glass and heated on a hot plate at 380°C until complete dissolution of the precursor. After being cooled to room temperature, the solution of the Erlenmeyer flask is poured into a 250 mL volumetric flask. Afterwards, the volumetric flask is filled with deionized water up to the 250 mL mark, followed by complete homogenization. An appropriate amount of solution is taken out by pipette and transferred into a 250 mL volumetric flask for the 2nd dilution, where the volumetric flask is filled with internal standard and 10% hydrochloric acid up to the 250 mL mark and then homogenized. Finally, this 50 mL solution is used for ICP measurement.

**B) SEM (Scanning Electron Microscope) analysis**

The morphology of positive electrode active materials is analyzed by a Scanning Electron Microscopy (SEM) technique. The measurement is performed with a JEOL JSM 7100F (https://www.jeolbenelux.com/JEOL-BV-News/jsm-7100f-thermal-field-emission-electron-microscope) under a high vacuum environment of $9.6 \times 10^{-5}$ Pa at 25°C.

**C) Particle size**

**C1) Secondary particle size analysis**

The particle size distribution (PSD) of the positive electrode active material powder is measured by laser diffraction particle size analysis using a Malvern Mastersizer 3000 with a Hydro MV wet dispersion accessory (https://www.malvernpanalytical.com/en/ products/product-range/mastersizer-range/mastersizer-3000#overview) after having dispersed each of the powder samples in an aqueous medium. In order to improve the dispersion of the powder, sufficient ultrasonic irradiation and stirring is applied, and an appropriate surfactant is introduced. D50 is defined as the particle size at 50% of the cumulative volume% distributions obtained from the Malvern Mastersizer 3000 with Hydro MV measurements.

**C2) Primary particle size analysis**

The diameter of primary particle is calculated by using ImageJ software (ImageJ 1.52a, National Institutes of Health, USA) according to the following steps:

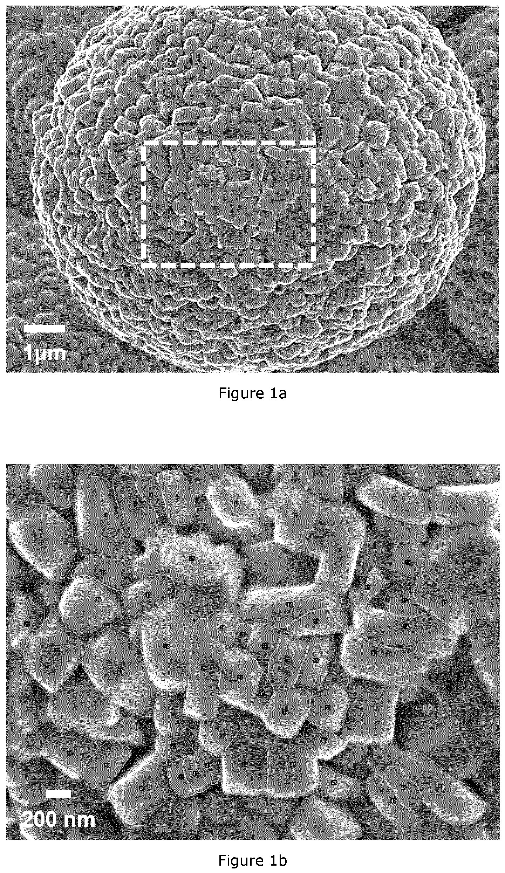

Step 1) Open the file containing SEM image of positive electrode active material with 10,000 times magnification wherein the image is taken at the center part of a secondary particle. Example of such image is shown in Figure 1a wherein the dotted line shows the area to be captured corresponding to Figure 1b.
Step 2) Set scale according to the SEM magnification.
Step 3) Draw lines following primary particle edges using polygon selections tool for at least 50 particles. The particles at the edges of image is to be excluded if truncated.
Step 4) Measure the area of the drawn primary particles selected from Set Measurements and Area box.
Step 5) Calculate the particle diameter of each measured area by assuming the particle in the spherical shape following $$d = 2 \times \sqrt{\frac{area}{\pi}}$$ and obtain the average primary particle diameter for at least 50 particles.

**D) X-ray photoelectron spectroscopy analysis**

In the present invention, X-ray photoelectron spectroscopy (XPS) is used to analyze the surface of positive electrode active material powder particles. In XPS measurement, the signal is acquired from the first few nanometers (e.g. 1 nm to 10 nm) of the uppermost part of a sample, i.e. surface layer. Therefore, all elements measured by XPS are contained in the surface layer.
For the surface analysis of positive electrode active material powder particles, XPS measurement is carried out using a Thermo K-a+ spectrometer (Thermo Scientific, https://www.thermofisher.com/order/catalog/product/IQLAAD

GAAFFACVMAHV). Monochromatic Al Kα radiation (hu=1486.6 eV) is used with a spot size of 400 μm and measurement angle of 45°. A wide survey scan to identify elements present at the surface is conducted at 200 eV pass energy. C1s peak having a maximum intensity (or centered) at a binding energy of 284.8 eV is used as a calibrate peak position after data collection. Accurate narrow scans are performed afterwards at 50 eV for at least 10 scans for each identified element to determine the precise surface composition.

Curve fitting is done with CasaXPS Version2.3.19PR1.0 (Casa Software, http://www.casaxps.com/) using a Shirley-type background treatment and Scofield sensitivity factors. The fitting parameters are according to Table 1a. Line shape GL(30) is the Gaussian/Lorentzian product formula with 70% Gaussian line and 30% Lorentzian line. LA($\alpha$, $\beta$, m) is an asymmetric line-shape where a and $\beta$ define tail spreading of the peak and m define the width.

Table 1a. XPS fitting parameter for Ni2p3, Mn2p3, Co2p3, and Zr3d.

| Element | Sensitivity factor | Fitting range (eV) | Defined peak(s) | Line shape |
|---|---|---|---|---|
| Ni | 14.61 | 851.3±0.1-869.4 ±0.1 | Ni2p3, Ni2p3 satellite | LA(1.33, 2.44, 69) |
| Mn | 9.17 | 639.9±0.1-649.5 ±0.1 | Mn2p3, Mn2p3 satellite | GL(30) |
| Co | 12.62 | 775.8±0.4-792.5 ±0.4 | Co2p3-1, Co2p3-2, Co2p3 satellite | GL(30) |
| Zr | 7.04 | 178.0-188.5 | Zr3d3, Zr3d1 | GL(30) |

For Zr and Co peaks, constraints are set for each defined peak according to Table 1b.

Table 1b. XPS fitting constraints for peaks fitting.

| Element | Defined peak | Fitting range constraint (eV) | FWHM constraint (eV) | Area constraint |
|---|---|---|---|---|
| Zr | Zr3d1 | 184.0-188.5 | Equal to Zr3d3 | 66.7% of Zr3d3 |
| | Zr3d3 | 178.0-184.0 | 0.5-4.0 | No constraint set |
| Co | Co2p3-1 | 776.0-780.9 | 0.5-4.0 | No constraint set |
| | Co2p3-2 | 781.0-785.0 | 0.5-4.0 | No constraint set |
| | Co2p3 satellite | 785.1-792.0 | 0.5-6.0 | No constraint set |

The Zr surface contents as determined by XPS are expressed as a molar fraction of Zr in the surface layer of the particles divided by the total content of Ni, Mn, Co, and Zr in said surface layer. It is calculated as follows:

$$\text{fraction of Zr} = Zr_B = \frac{Zr\,(at\%)}{Ni\,(at\%) + Mn\,(at\%) + Co\,(at\%) + Zr\,(at\%)}$$

**E) Sulfide solid-state battery testing**

**E1) Sulfide solid-state battery preparation**

Positive electrode preparation:

For the preparation of a positive electrode, a slurry contains positive electrode active material powder, Li-P-S based solid electrolyte, carbon (Super-P, Timcal), and binder (RC-10, Arkema) - with a formulation of 64.0 : 30.0 : 3.0 : 3.0 by weight - in butyl acetate solvent is mixed in Ar-filled glove box. The slurry is casted on one side of an aluminum foil followed by drying the slurry coated foil in a vacuum oven to obtain a positive electrode.

The obtained positive electrode is punched with a diameter of 10 nm wherein the active material loading amount is around 4 mg/cm$^2$.

Negative electrode preparation:

For the preparation of negative electrode, Li foil (diameter 3 mm, thickness 100 μm) is placed centered on the top of In foil (diameter 10 nm, thickness 100 μm) and pressed to form Li-In alloy negative electrode.

Separator

For the preparation of separator which also has a function of the solid electrolyte in a battery, the Li-P-S based solid electrolyte is pelletized with a pressure of 250 MPa to obtain 100 μm pellet thickness.

Cell assembly

A sulfide solid-state battery is assembled in an argon-filled glovebox with such order from bottom to top: positive electrode comprising Al current collector with the coated part on the top - separator - negative electrode with Li side on the top - Cu current collector. The stacked components are pressed together with a pressure of 250 MPa and placed in an external cage to prevent air exposure.

**E2) Testing method**

The testing method is a conventional "constant cut-off voltage" test. The conventional cell test in the present invention follows the schedule shown in Table 2. Each cell is cycled at 60°C using a Toscat-3100 computer-controlled galvanostatic cycling station (from Toyo). The schedule uses a 1C current definition of 160 mA/g. The initial charge capacity (CQ1) and discharge capacity (DQ1) are measured in constant current mode (CC) at C rate of 0.1 C in below voltage range:

- 4.2 V to 2.5 V (Li/Li$^+$) or 3.6 V to 1.9 V (InLi/Li$^+$) for CEX1.1, EX1, CEX2.1, CEX2.2, CEX3, and EX2.

The irreversible capacity IRRQ is expressed in % as follows:

$$IRRQ\ (\%) = \frac{(CQ1 - DQ1)}{CQ1} \times 100$$

Table 2. Cycling schedule for sulfide solid-state battery testing method

| Charge | | | | Discharge | | | |
|---|---|---|---|---|---|---|---|
| C Rate | End current | Rest (min) | V/Li metal (V) | C Rate | End current | Rest (min) | V/Li metal (V) |
| 0.1 | - | 30 | 4.2 | 0.1 | - | 30 | 2.5 |
| 0.1 | - | 30 | 4.3 | 0.1 | - | 30 | 2.5 |

**F) TEM (Transmission Electron Microscope) analysis**

To examine the Zr distributions within a lithium transition metal-based oxide particle, cross-sectional TEM lamellas of particles are prepared by Nova Nano SEM200 (FEI). A Ga ion beam is used with 30kV voltage and 30pA-7nA current. The obtained etched sample has a dimension of 5×8μm with 100nm thickness. Using the prepared (etched) sample, the surface property from the top to the center of the lithium transition metal-based oxide particle is analyzed by TEM and energy-dispersive X-ray spectroscopy (EDS). The TEM-EDS line scan is performed on a Tecnai G$^2$ F30 S-TWIN (FEI) with ELITE T 70 detector (EDAX). An EDS analysis of the lithium transition metal-based oxide particle provides the quantitative element analysis of the cross-section. Zr content is normalized by the total atomic fraction of Ni, Mn, Co, and Zr.

The invention is further illustrated by the following (non-limitative) examples:

**Comparative Example 1**

CEX1 is obtained through a solid-state reaction between a lithium source and a transition metal-based source running as follows:

1) Co-precipitation: a transition metal-based oxidized hydroxide precursor with metal composition of $Ni_{0.64}Mn_{0.17}Co_{0.20}$ is prepared by a co-precipitation process in a large-scale continuous stirred tank reactor (CSTR) with mixed nickel-manganese-cobalt sulfates, sodium hydroxide, and ammonia.

2) Mixing: the transition metal-based oxidized hydroxide precursor and LiOH as a lithium source are homogenously mix with a lithium to metal M' (Li/M') ratio of 1.03 in an industrial blending equipment to obtain a mixture.

3) First heating: the mixture from Step 2) is heated at 830°C for 10 hours under an oxygen atmosphere. The heated powder is crushed, classified, and sieved so as to obtain an intermediate product.

4) Second heating: the intermediate product from Step 3) is heated at 350°C for 6 hours under an oxygen atmosphere so as to obtain CEX1.1 having M' comprising Ni, Mn, and Co in a ratio Ni: Mn: Co of 0.638: 0.165: 0.197 as obtained by ICP. CEX1 has a D50 of 10 $\mu$m.

Optionally, a source of dopant can be added in the co-precipitation process in Step 1) or in the mixing step in the Step 2) together with lithium source. A certain element can be added as a dopant, for instance, to improve the electrochemical properties of the positive electrode active material.

**Example 1**

EX1 is obtained through a solid-state reaction between a lithium source and a transition metal-based source running as follows:

1) Co-precipitation: a transition metal-based oxidized hydroxide precursor with metal composition of $Ni_{0.64}Mn_{0.17}Co_{0.200}$ is prepared by a co-precipitation process in a large-scale continuous stirred tank reactor (CSTR) with mixed nickel-manganese-cobalt sulfates, sodium hydroxide, and ammonia.

2) Mixing: the transition metal-based oxidized hydroxide precursor and LiOH as a lithium source are homogenously mix with a lithium to metal M' (Li/M') ratio of 1.03 in an industrial blending equipment to obtain a mixture.

3) First heating: the mixture from Step 2) is heated at 830°C for 10 hours under an oxygen atmosphere. The heated powder is crushed, classified, and sieved so as to obtain an intermediate product.

4) Wet mixing: Step 4a) to Step 4c) below is applied to introduce Zr into the positive electrode active material

Step 4a) Zr solution preparation: 0.6 mol% of Zr from Zr-propoxide (70 wt% Zr-propoxide in n-propanol solution), 1.2 mol% of Li-ethoxide powder, each with respect to the total molar contents of Ni, Mn, and Co in the intermediate product, and ethanol solvent are mixed to form a solution. The amount of ethanol solvent is 55 wt.% of the total weight of the designated intermediate product to mix in the Step 4b).

Step 4b) Mixing: intermediate product obtained from Step 3) is mixed with Zr solution prepared in Step 4a) for 20 minutes in a heatable reactor.

Step 4c) Heating: 70°C heat is applied to reactor in Step 4b) while at the same time reactor is connected to a vacuum pump to evaporate volatile phases. The product obtained from this step is a dried powder.

5) Second heating: the dried powder from Step 4c) is heated at 350°C for 6 hours under an oxygen atmosphere so as to obtain EX1 having M' comprising Ni, Mn, Co and Zr in a ratio Ni: Mn: Co: Zr of 0.635: 0.163: 0.196: 0.006 as obtained by ICP. EX1 has a D50 of 10 $\mu$m.

**Comparative Example 2**

CEX2.1 is obtained through the same procedure as CEX1, except that the first heating temperature in Step 3) is 860°C.

CEX2.2 is obtained through the same procedure as EX1, except that the first heating temperature in Step 3) is 860°C.

**Comparative Example 3**

CEX3 is obtained through the same procedure as CEX1, except that the first heating temperature in Step 3) is 795°C.

**Example 2**

EX2 is obtained through the same procedure as EX1, except that the first heating temperature in Step 3) is 795°C.

**Comparative Example 4**

CEX5 is obtained through the same procedure as CEX1, except that the first heating temperature in Step 3) is 750°C.

**Example 3**

EX4 is obtained through the same procedure as EX1, except that the first heating temperature in Step 3) is 750°C.

**Comparative Example 5**

CEX6 is obtained through the same procedure as CEX1, except that the first heating temperature in Step 3) is 750°C.

**Example 4**

EX5 is obtained through the same procedure as EX1, except that the first heating temperature in Step 3) is 750°C.

Table 3. Summary of the primary particle diameter, composition, and the corresponding electrochemical properties of example and comparative examples.

| ID | Average primary particle diameter (nm) | Carbon (ppm) | ICP | | XPS | XPS/ICP | Electrochemical property | |
|---|---|---|---|---|---|---|---|---|
| | | | Ni (mol%) | $Zr_A$* | $ZrB$* | $Zr_B/Zr_A$, | DQ1 (mAh/g) | IRRQ (mAh/g) |
| CEX1 | 270 | 249 | 63.8 | 0.00 | 0.00 | n/a** | 137.3 | 25.9 |
| EX1 | 270 | 1077 | 63.5 | 0.0059 | 0.94 | 158.6 | 173.5 | 6.7 |
| CEX2.1 | 371 | 178 | 63.8 | 0.00 | 0.00 | n/a** | 126.1 | 29.5 |
| CEX2.2 | 371 | 549 | 63.2 | 0.0059 | 0.73 | 123.1 | 151.0 | 12.4 |
| CEX3 | 231 | 195 | 65.0 | 0.00 | 0.00 | n/a** | 145.1 | 17.0 |
| EX2 | 231 | 1062 | 64.7 | 0.0059 | 0.83 | 142.3 | 176.6 | 8.3 |
| CEX4 | 190 | 149 | 65.0 | 0.00 | 0.00 | n/a** | 146.0 | 17.2 |
| EX3 | 190 | 1001 | 65.1 | 0.0059 | 0.59 | 101.6 | 172.5 | 6.6 |
| CEX5 | 192 | 238 | 64.9 | 0.00 | 0.00 | n/a** | 120.3 | 23.3 |
| EX4 | 192 | 1076 | 65.1 | 0.0059 | 0.68 | 114.6 | 171.7 | 8.5 |
| * Relative to molar contents of Ni, Mn, Co, and Zr<br>** Not applicable because $Zr_A$ is 0. | | | | | | | | |

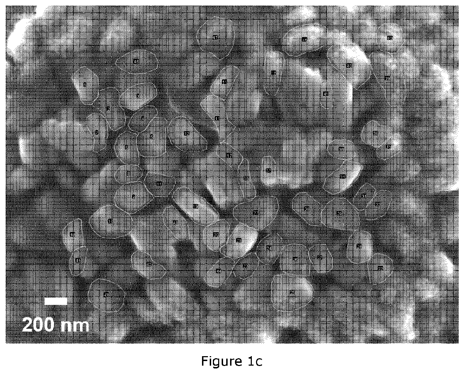

Table 3 summarizes the primary particle diameter, composition, and the corresponding electrochemical properties of example and comparative examples. The average primary particle diameter of EX1, EX2, EX3 and EX4 are 270, 231, 190, and 192 nm, respectively. These average diameters are smaller than the average primary particle diameters of CEX2.1 and CEX2.2 which are 371 nm. The primary particle SEM images of CEX2.2 and EX1 are shown in Figure 1b and 1c, respectively. The images contain drawn lines and number to identify primary particle in order to obtain the average primary particle diameter.

In the Table 3, the XPS analysis result of EX1 and CEX2.2 showing Zr atomic ratio (equivalent with molar ratio) with respect to the total atomic fraction of Ni, Mn, Co, and Zr ($Zr_B$). The table also compares the result with that of ICP. The $Zr_B$ higher than 0 indicates said Zr is presence in the surface of the positive electrode active material as associated with the XPS measurement which signal is acquired from the first few nanometers (e.g. 1 nm to 10 nm) of the uppermost part of a sample, i.e. surface layer. On the other hand, Zr atomic ratio obtained from ICP measurement ($Zr_A$) is from the entire particles. Therefore, the ratio of XPS to ICP ($Zr_B/Zr_A$) higher than 1 indicates said elements Zr presence mostly on the surface of the positive electrode active material. The higher $Zr_B/Zr_A$ value corresponds with the more Zr presence in the surface of positive electrode active material. $Zr_B/Zr_A$ in EX1 is higher than that of CEX2.2 $Zr_B/Zr_A$. The representative of XPS spectra showing Zr3d5 and 3d3 peaks of CEX2.2 and EX1 are displayed in Figure 2.

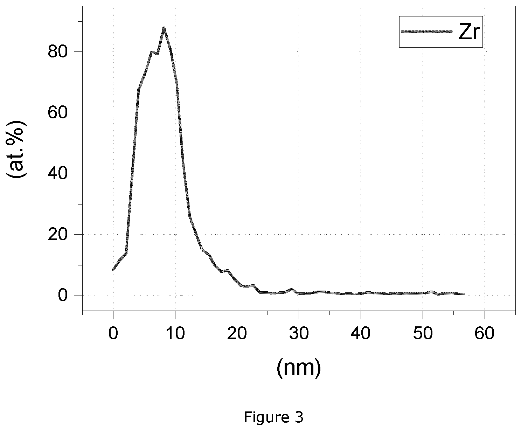

Figure 3 shows the TEM-EDS measurement of EX1 (x-axis: distance where 0 is the starting point of the surface layer, y-axis: element in atomic ratio). Zr thickness from the measurement is 25.8 nm.

Carbon content in positive electrode active material after Zr treatment is higher comparing with before treatment which associated with a better electrochemical performance of active material. Carbon is originated from the Zr alkoxide compound used in the treatment.

The combination of average primary particle diameter in the range of 170 nm to 340 nm and $Zr_B/Zr_A$ higher than 50.0, preferably higher than 100.0, can achieve the objective of the present invention, which is to provide a positive electrode active material having an improved first charge capacity of at least 160 mAh/g in the solid-state battery.

## Claims

1. A positive electrode active material for solid-state batteries, wherein the positive electrode active material comprises Li, M', and oxygen, wherein M' comprises:

   - Ni in a content x between 50.0 mol% and 75.0 mol%, relative to M';
   - Co in a content y between 0.0 mol% and 40.0 mol%, relative to M';
   - Mn in a content z between 0.0 mol% and 40.0 mol%, relative to M',
   - D in a content a between 0.0 mol% and 2.0 mol%, relative to M', wherein D comprises at least one element of the group consisting of: Al, B, Ba, Ca, Cr, Fe, Mg, Mo, Nb, S, Si, Sr, Ti, Y, V, W, and Zn, and,
   - Zr in a content b between 0.1 mol% and 5.0 mol%, relative to M',
   - wherein x, y, z, a, and b are measured by ICP,
   - wherein x+y+z+a+b is 100.0 mol%,

   wherein the positive electrode active material has a Zr content $Zr_A$ defined as $\frac{b}{(x+y+z+b)}$ ,
   wherein the positive electrode active material has a Zr content $Zr_B$, wherein $Zr_B$ is determined by XPS analysis,
   wherein $Zr_B$ is expressed as molar fraction compared to the sum of molar fractions of Co, Mn, Ni, and Zr, as measured by XPS analysis,
   wherein the ratio $Zr_B / Zr_A > 50.0$,
   wherein the positive electrode active material comprises secondary particles having a plurality of primary particles,
   wherein said primary particles have an average diameter of between 170 nm to 340 nm as determined by measuring primary particle size in an image taken by SEM.

2. Positive electrode active material according to claim 1, wherein the ratio $Zr_B / Zr_A$ is at least 80, preferably at least 100 and most preferably at least 120.

3. Positive electrode active material according to claim 1 or 2, wherein the ratio $Zr_B / Zr_A$ is at most 500 and preferably at most 300, and most preferably at most 200.

4. Positive electrode active material according to any of the preceding claims, wherein $x \geq 55.0$ mol% and preferably $x > 60.0$ mol%

5. Positive electrode active material according to any of the preceding claims, wherein $x \leq 72.0$ mol%.

6. Positive electrode active material according to any of the preceding claims, $0 \text{ mol } \% \leq y \leq 20$ mol%.

7. Positive electrode active material according to any of the preceding claims, wherein b is at least 0.10 mol% and at most 1.00 mol%, relative to M'.

8. Positive electrode active material according to any of the preceding claims, wherein the secondary particle median size D50 is at least 2.0 $\mu$m and at most 15.0 $\mu$m, as determined by laser diffraction particle size analysis.

9. Positive electrode active material according to any of the preceding claims, wherein the carbon content is at least 600 ppm and at most 3000 ppm, as determined by carbon analyzer.

10. Positive electrode active material according to any of the preceding claims, wherein the Zr thickness is at least 10 nm, as determined by TEM-EDS measurement.

11. A method for the manufacturing of a positive electrode active material for solid-state batteries, wherein the positive electrode active material is the positive electrode active material according to any one of claims 1 to 10, comprising the consecutive steps of

- preparing a lithium transition metal-based oxide compound,
- mixing said lithium transition metal-based oxide compound with a source of Zr, preferably Zr alkoxide in lithium alkoxide containing alcohol solvent, thereby obtaining a mixture, and
- heating the mixture in an oxidizing atmosphere in a furnace at a temperature between 350°C and less than 500°C, preferably at most 450°C, for a time between 1 hour and 20 hours so as to obtain said positive electrode active material powder according to any one of claims 1 to 10.

12. The method according to claim 11, wherein the method comprises a further step, before heating said mixture, of drying said mixture.

13. The method according to claim 11, wherein the method comprises a further step, before heating said mixture, of drying said mixture by means of vacuum heating.

14. A solid-state battery comprising the positive electrode active material according to claims 1 to 10.

15. Solid-state battery according to claim 14, wherein said solid-state battery comprises a sulfide based solid electrolyte comprising Li, P, and S.

16. Use of the battery according to claim 14 or 15 in an electric vehicle or in a hybrid electric vehicle.

**Patentansprüche**

1. Plusplattenaktivmasse für Feststoffbatterien, wobei die Plusplattenaktivmasse Li, M' und Sauerstoff umfasst, wobei M' umfasst:

- Ni in einem Gehalt x zwischen 50,0 Mol-% und 75,0 Mol-%, bezogen auf M';
- Co in einem Gehalt y zwischen 0,0 Mol-% und 40,0 Mol-%, bezogen auf M';
- Mn in einem Gehalt z zwischen 0,0 Mol-% und 40,0 Mol-%, bezogen auf M',
- D in einem Gehalt a zwischen 0,0 Mol-% und 2,0 Mol-%, bezogen auf M', wobei D mindestens ein Element aus der Gruppe umfasst, bestehend aus: Al, B, Ba, Ca, Cr, Fe, Mg, Mo, Nb, S, Si, Sr, Ti, Y, V, W und Zn, und
- Zr in einem Gehalt b zwischen 0,1 Mol-% und 5,0 Mol-%, bezogen auf M',
- wobei x, y, z, a und b durch ICP gemessen werden,
- wobei x+y+z+a+b 100,0 Mol-% beträgt,

wobei die Plusplattenaktivmasse einen Zr-Gehalt $Zr_A$ definiert als $\frac{b}{(x+y+z+b)}$ aufweist,
wobei die Plusplattenaktivmasse einen Zr-Gehalt Zrs aufweist, wobei $Zr_B$ durch XPS-Analyse bestimmt wird,
wobei $Zr_B$ als Molenbruch verglichen mit der Summe der Molenbrüche von Co, Mn, Ni und Zr, wie durch XPS-Analyse gemessen, ausgedrückt wird,
wobei das Verhältnis $Zr_B$ / $Zr_A$ > 50,0,
wobei die Plusplattenaktivmasse Sekundärpartikel, aufweisend eine Vielzahl von Primärpartikeln, umfasst, wobei die Primärpartikel einen durchschnittlichen Durchmesser von zwischen 170 nm und 340 nm aufweisen, wie durch Messen der Primärpartikelgröße in einem Bild, das durch SEM aufgenommen wird, bestimmt.

2. Plusplattenaktivmasse nach Anspruch 1, wobei das Verhältnis $Zr_B$ / $Zr_A$ mindestens 80, vorzugsweise mindestens 100 und am meisten bevorzugt mindestens 120, beträgt.

3. Plusplattenaktivmasse nach Anspruch 1 oder 2, wobei das Verhältnis $Zr_B$ / $Zr_A$ mindestens 500, und vorzugsweise mindestens 300 und am meisten bevorzugt mindestens 200, beträgt.

4. Plusplattenaktivmasse nach einem der vorstehenden Ansprüche, wobei x ≥ 55,0 Mol-% und vorzugsweise x > 60,0 Mol-%

5. Plusplattenaktivmasse nach einem der vorstehenden Ansprüche, wobei x ≤ 72,0 Mol-%.

6. Plusplattenaktivmasse nach einem der vorstehenden Ansprüche, wobei 0 Mol-% ≤ y ≤ 20 Mol-%.

7. Plusplattenaktivmasse nach einem der vorstehenden Ansprüche, wobei b mindestens 0,10 Mol-% und höchstens 1,00 Mol-%, bezogen auf M', beträgt.

8. Plusplattenaktivmasse nach einem der vorstehenden Ansprüche, wobei die mittlere Größe D50 der Sekundärpartikel mindestens 2,0 μm und höchstens 15,0 μm, wie durch Laserbeugungs-Partikelgrößenanalyse bestimmt, beträgt.

9. Plusplattenaktivmasse nach einem der vorstehenden Ansprüche, wobei der Kohlenstoffgehalt mindestens 600 ppm und höchstens 3000 ppm, wie durch Kohlenstoffanalysator bestimmt, beträgt.

10. Plusplattenaktivmasse nach einem der vorstehenden Ansprüche, wobei die Zr-Dicke mindestens 10 nm, wie durch TEM-EDS-Messung bestimmt, beträgt.

11. Verfahren für das Fertigen einer Plusplattenaktivmasse für Feststoffbatterien, wobei die Plusplattenaktivmasse die Plusplattenaktivmasse nach einem der Ansprüche 1 bis 10 ist, umfassend die aufeinanderfolgenden Schritte

    - Herstellen einer lithiumübergangsmetallbasierten Oxidverbindung,
    - Mischen der lithiumübergangsmetallbasierten Oxidverbindung mit einer Quelle von Zr, vorzugsweise Zr-Alkoxid in Lithiumalkoxid enthaltend Alkohollösungsmittel, wodurch eine Mischung erhalten wird, und
    - Erhitzen der Mischung in einer Oxidationsatmosphäre in einem Ofen bei einer Temperatur zwischen 350 °C und weniger als 500 °C, vorzugsweise höchstens 450 °C, für eine Zeit zwischen 1 Stunde und 20 Stunden, um das Plusplattenaktivmassen-Pulver nach einem der Ansprüche 1 bis 10 zu erhalten.

12. Verfahren nach Anspruch 11, wobei das Verfahren einen weiteren Schritt, vor dem Erhitzen der Mischung, des Trocknens der Mischung umfasst.

13. Verfahren nach Anspruch 11, wobei das Verfahren einen weiteren Schritt, vor dem Erhitzen der Mischung, des Trocknens der Mischung durch Vakuumerhitzen umfasst.

14. Feststoffbatterie, umfassend die Plusplattenaktivmasse nach einem der Ansprüche 1 bis 10.

15. Feststoffbatterie nach Anspruch 14, wobei die Feststoffbatterie einen sulfidbasierten Feststoffelektrolyten, umfassend Li, P und S, umfasst.

16. Verwendung der Batterie nach Anspruch 14 oder 15 in einem Elektrofahrzeug oder in einem Hybridelektrofahrzeug.

**Revendications**

1. Matériau actif d'électrode positive destiné à des batteries à l'état solide, dans lequel le matériau actif d'électrode positive comprend Li, M' et oxygène, dans lequel M' comprend :

    - Ni en une teneur x entre 50,0 % molaires et 75,0 % molaires, par rapport à M' ;
    - Co en une teneur y entre 0,0 % molaire et 40,0 % molaires, par rapport à M' ;
    - Mn en une teneur z entre 0,0 % molaire et 40,0 % molaires, par rapport à M',
    - D en une teneur a entre 0,0 % molaire et 2,0 % molaires, par rapport à M', dans lequel D comprend au moins un élément du groupe constitué par : Al, B, Ba, Ca, Cr, Fe, Mg, Mo, Nb, S, Si, Sr, Ti, Y, V, W et Zn, et,
    - Zr en une teneur b entre 0,1 % molaire et 5,0 % molaires, par rapport à M',
    - dans lequel x, y, z, a et b sont mesurés par ICP,
    - dans lequel x+y+z+a+b vaut 100,0 % molaires,

dans lequel le matériau actif d'électrode positive a une teneur en Zr $Zr_A$ définie en tant que $\frac{b}{(x+y+z+b)}$,
dans lequel le matériau actif d'électrode positive a une teneur en Zr $Zr_B$, dans lequel $Zr_B$ est déterminé par analyse XPS, dans lequel $Zr_B$ est exprimée en tant que fraction molaire comparée à la somme des fractions molaires de Co, Mn, Ni et Zr, telles que mesurées par analyse XPS,
dans lequel le rapport $Zr_B$ / $Zr_A$ > 50,0,
dans lequel le matériau actif d'électrode positive comprend des particules secondaires ayant une pluralité de particules primaires,
dans lequel lesdites particules primaires ont un diamètre moyen compris de 170 nm à 340 nm tel que déterminé en mesurant la taille de particule primaire dans une image prise par MEB.

2. Matériau actif d'électrode positive selon la revendication 1, dans lequel le rapport $Zr_B$ / $Zr_A$ est d'au moins 80, de préférence au moins 100 et le plus préférablement au moins 120.

3. Matériau actif d'électrode positive selon la revendication 1 ou 2, dans lequel le rapport $Zr_B$ / $Zr_A$ est d'au plus 500 et de préférence au plus 300, et le plus préférablement au plus 200.

4. Matériau actif d'électrode positive selon l'une quelconque des revendications précédentes, dans lequel x $\geq$ 55,0 % molaires et de préférence x > 60,0 % molaires

5. Matériau actif d'électrode positive selon l'une quelconque des revendications précédentes, dans lequel x $\leq$ 72,0 % molaires.

6. Matériau actif d'électrode positive selon l'une quelconque des revendications précédentes, 0 % molaire $\leq$ y $\leq$ 20 % molaires.

7. Matériau actif d'électrode positive selon l'une quelconque des revendications précédentes, dans lequel b est d'au moins 0,10 % molaire et d'au plus 1,00 % molaire, par rapport à M'.

8. Matériau actif d'électrode positive selon l'une quelconque des revendications précédentes, dans lequel la taille médiane D50 de particules secondaires est d'au moins 2,0 $\mu$m et d'au plus 15,0 $\mu$m, telle que déterminée par analyse de taille de particules par diffraction laser.

9. Matériau actif d'électrode positive selon l'une quelconque des revendications précédentes, dans lequel la teneur en carbone est d'au moins 600 ppm et d'au plus 3000 ppm, telle que déterminée par analyseur de carbone.

10. Matériau actif d'électrode positive selon l'une quelconque des revendications précédentes, dans lequel l'épaisseur de Zr est d'au moins 10 nm, telle que déterminée par mesure TEM-EDS.

11. Procédé destiné à la fabrication d'un matériau actif d'électrode positive pour des batteries à l'état solide, dans lequel le matériau actif d'électrode positive est le matériau actif d'électrode positive selon l'une quelconque des revendications 1 à 10, comprenant les étapes consécutives consistant à

- préparer un composé d'oxyde à base de lithium-métal de transition,
- mélanger ledit composé d'oxyde à base de lithium-métal de transition avec une source de Zr, de préférence un alcoolate de Zr dans un solvant alcoolique contenant de l'alcoolate de lithium, en obtenant de ce fait un mélange, et
- chauffer le mélange dans une atmosphère oxydante dans un four à une température comprise entre 350 °C et moins de 500 °C, de préférence d'au plus 450 °C, pendant un temps compris entre 1 heure et 20 heures de façon à obtenir ladite poudre de matériau actif d'électrode positive selon l'une quelconque des revendications 1 à 10.

12. Procédé selon la revendication 11, dans lequel le procédé comprend une étape supplémentaire, avant le chauffage dudit mélange, consistant à sécher ledit mélange.

13. Procédé selon la revendication 11, dans lequel le procédé comprend une étape supplémentaire, avant le chauffage dudit mélange, consistant à sécher ledit mélange au moyen d'un chauffage sous vide.

**14.** Batterie à l'état solide comprenant le matériau actif d'électrode positive selon les revendications 1 à 10.

**15.** Batterie à l'état solide selon la revendication 14, dans laquelle ladite batterie à l'état solide comprend un électrolyte solide à base de sulfure comprenant Li, P et S.

**16.** Utilisation de la batterie selon la revendication 14 ou 15 dans un véhicule électrique ou dans un véhicule électrique hybride.

Figure 1a

Figure 1b

Figure 1c

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018026268 A